# EUROPÄISCHE PATENTANMELDUNG

(11) **EP 1 439 099 A2**
(43) Veröffentlichungstag der Anmeldung: **21.07.2004**
(21) Anmeldenummer: 04000404.6
(22) Anmeldetag: 12.01.2004
(51) Int. Cl.: B60R 25/04

(54) **Vorrichtung und Verfahren zur Diebstahlsicherung eines Fahrzeugs mit Wegfahrsperre**

(30) Priorität: 18.01.2003 DE 10301728
(71) Anmelder: AUDI AG, 85045 Ingolstadt (DE)
(72) Erfinder: Graf, Johann, 93345 Hausen (DE); Kischkat, Ralf, Dr., 85057 Ingolstadt (DE)
(74) Vertreter: Thielmann, Frank

(57) **Zusammenfassung**

In gewissen Situationen ist es notwendig, ein Kraftfahrzeug ohne Authentifizierung (2) freizuschalten. Um eine erhöhte Sicherheit gegen Manipulation zu gewährleisten, wird für diese Fälle ein Indiziennachweis durchgeführt, wobei Messgrößen, die ein Indiz dafür darstellen, dass das Fahrzeug in einer vorgegebenen Zeit vor einem Neustart bereits regulär betätigt wurde, mit vorgegebenen Schwellwerten verglichen werden. Für diesen Indiziennachweis (7, 8) können speziell die Getriebeöltemperatur, die Turbinendrehzahl und die Abtriebsdrehzahl verwendet werden.

## Beschreibung

Die vorliegende Erfindung betrifft ein Verfahren zur Sicherung eines Fahrzeugs mit Wegfahrsperre. Darüber hinaus betrifft die vorliegende Erfindung eine entsprechende Vorrichtung.

Üblicherweise ist bei modernen Kraftfahrzeugen ein Starten nur möglich, wenn dies ein sogenannter Wegfahrsperren-Master zulässt. Dieser nimmt die Authentifizierung, z. B. die Identifizierung eines Zündschlüsselcodes, vor und führt die Kommunikation mit den im Kraftfahrzeug verbauten Funktionssteuergeräten, wie zum Beispiel das Motorsteuergerät. Eine Authentifizierung ist aber nur notwendig, wenn das Fahrzeug eine vorgegebene Zeit (bis etwa 30 Sekunden) nicht regulär betrieben wurde. Das Einleiten einer Authentifizierungsprozedur vor Ablauf dieses kurzen Zeitraums birgt die Gefahr, dass das Kraftfahrzeug bei einer Unterbrechung der Bordspannung während der Fahrt nicht unmittelbar weiterbetrieben werden kann. Eine derartige Störung kann beispielsweise bei der Durchfahrt einer Hochspannungsleitung auftreten. Eine ähnliche Situation ergibt sich, falls der Motor des Kraftfahrzeugs beispielsweise beim Anfahren am Berg abgewürgt wird. Auch in dieser Situation soll eine unter Umständen zeitaufwändige Authentifizierung vermieden werden.

Üblicherweise wird dieses Problem dadurch gelöst, dass der Wegfahrsperren-Master mit einem RC-Glied versehen ist, das beispielsweise mit einer Spannung von 5 Volt geladen wird. Im Falle der Unterbrechung sinkt die Spannung an ihm ab. Dieser Entladevorgang ist zeitlich exakt vorbestimmt, so dass anhand einer Schwellwertbetrachtung entschieden werden kann, bis zu welchem Zeitpunkt eine Authentifizierung unterbleiben kann. Wenn die Spannung am RC-Glied zu weit abgesunken ist, ist schließlich wieder eine Authentifizierung notwendig.

Eine weiterentwickelte Fahrzeugsicherungseinrichtung ist aus der deutschen Offenlegungsschrift DE 195 05 871 A1 bekannt. Die dort beschriebene Fahrzeugsicherungseinrichtung ist mit einer programmgesteuerten Prozessoreinheit, welche ein Funktionssteuergerät nur nach erfolgter Durchführung einer Freigabekommunikation freigibt, ausgestattet. Die Prozessoreinheit zeichnet während des Fahrbetriebs eine Information (vₛₚ) über einen für den Fahrbetrieb charakteristischen Zustand auf, aufgrund der nach einer Unterbrechung des Fahrbetriebs eine Wiederfreigabe unabhängig von der Durchführung einer Freigabekommunikation erfolgt, wenn die aufgezeichnete Zustandsinformation einen Fahrbetrieb anzeigt. Hiermit soll erreicht werden, dass bei Diebstahlversuchen durch Anschleppen erzwungenermaßen eine über einer Grenzdrehzahl liegende Motordrehzahl erreicht wird, wenn bei dieser Grenzdrehzahl keine Authentifizierungsprozedur mehr vorgenommen wird. Dies bedeutet, dass eine Wiederinbetriebnahme ohne Benutzerberechtigungsprüfung nur gestattet wird, wenn in einem bestimmten Speicher zum Zeitpunkt der Betriebsunterbrechung eine Information über einen regulären Fahrbetrieb abgelegt ist. Als Information über den regulären Fahrbetrieb wird die Fahrzeuggeschwindigkeit oder der gewählte Gang herangezogen.

Das Einbauen derartiger RC-Glieder ist aus verschiedenen Gründen wie Raummangel, Überschreitung von Höchsttemperaturen und dergleichen nicht in jedes Steuergerät möglich. Darüber hinaus machen Toleranzdrifts über Temperatur und Alterung den Freistartzeitraum ungenau. Ferner steigen durch ein derartiges RC-Glied die Bauteilekosten.

Die Aufgabe der vorliegenden Erfindung besteht darin, die Diebstahlsicherheit derartiger Wegfahrsperren weiter zu erhöhen.

Erfindungsgemäß wird diese Aufgabe gelöst durch ein Verfahren zur Sicherung eines Fahrzeugs durch Erfassen mehrerer Messgrößen, die ein Indiz dafür darstellen, dass das Fahrzeug in einer vorgegebenen Zeit vor einem Neustart bereits regulär betätigt wurde, Entscheiden, ob mindestens eine der erfassten Messgrößen auf einen regulären Betrieb vor dem Neustart hinweist, und Neustarten des Fahrzeugs unter Umgehung einer Authentifizierungsprozedur, falls für einen regulären Betrieb in der Vergangenheit entschieden wurde, und andernfalls Durchführen der Authentifizierungsprozedur vor dem Neustart.

Ferner ist erfindungsgemäß vorgesehen einer Vorrichtung zur Sicherung eines Fahrzeugs mit einer Sensoreinrichtung zur Erfassen mehrerer Messgrößen, die ein Indiz dafür darstellen, dass das Fahrzeug in einer vorgegebenen Zeit vor einem Neustart bereits regulär betätigt wurde, einer Recheneinrichtung, die an die Sensoreinrichtung angeschlossen ist, zum Entscheiden, ob mindestens eine der erfassten Messgrößen auf einen regulären Betrieb vor dem Neustart hinweist, und zur Ausgabe eines Startsignals und einer Authentifizierungseinrichtung, die mit der Recheneinrichtung verbunden ist, zur Überprüfung der Berechtigung eines Fahrzeugführers zum Neustart des Fahrzeugs, wobei auf eine Authentifizierungsprozedur vor dem Neustart verzichtbar ist, falls laut Recheneinrichtung für einen regulären Betrieb in der Vergangenheit entschieden ist.

Vorteilhafterweise umfassen die Messgrößen die Getriebeöltemperatur, die Turbinendrehzahl und/oder die Abtriebsdrehzahl. Überschreitet eine oder mehrere dieser Messgrößen einen jeweils vorgegebenen Schwellwert, so ist dies ein klares Indiz dafür, dass das Kraftfahrzeug vor dem Reset beziehungsweise Neustart regulär betrieben wurde.

Zusätzlich kann die Zeit zwischen einem regulären Betriebsende und dem Neustart für die Entscheidung, ob eine Authentifizierung durchgeführt werden soll oder nicht, ausgewertet werden. Die Zeitkomponente ist nach wie vor ein wesentliches Merkmal, um ein Indiz über den rechtmäßigen Betrieb des Kraftfahrzeugs zu gewinnen.

Weiterhin kann zusätzlich die Getriebeöltemperatur von dem letzten regulären Betrieb für die Entscheidung über die Authentifizierung ausgewertet werden. Die Differenz zwischen der aktuellen Getriebeöltemperatur und einer alten, gespeicherten Getriebeöltemperatur ist ein verhältnismäßig sicheres Maß für die Dauer, in der das Kraftfahrzeug nicht betrieben wurde.

Vorzugsweise wird in der Recheneinrichtung ein Authentifizierungsbit gesetzt, sobald die Authentifizierung positiv durchlaufen ist. Damit braucht auch bei kurzen Unterbrechungen eine Authentifizierung nicht durchgeführt zu werden, da in diesen Fällen eine Rücksetzung nicht erfolgt. Erst bei einem regulären Nachlauf wird dieses Authentifizierungsbit günstigerweise zurückgesetzt, so dass bei einem anschließenden Start eine reguläre Authentifizierungsprozedur wieder angestoßen wird.

Die vorliegende Erfindung wird nun anhand der beigefügten Zeichnungen näher erläutert, in denen zeigen:
- Fig. 1: ein Blockschaltbild zu einer Ausführungsform des erfindungsgemäßen Verfahrens; und
- Fig. 2: ein Blockschaltdiagramm des erfindungsgemäßen Indiziennachweises.

Das nachfolgend näher dargestellte Ausführungsbeispiel stellt lediglich eine bevorzugte Ausführungsform der vorliegenden Erfindung dar.

Die erfindungsgemäße Sicherungsvorrichtung beziehungsweise Wegfahrsperre soll eine "erweiterte Verfügbarkeit" des Kraftfahrzeugs gewährleisten. Wenn nach erfolgter Freischaltung durch die Wegfahrsperre ein Reset auftritt beziehungsweise ein neuer Klemme-15-Zyklus (Einschaltzyklus) innerhalb eines gewissen Zeitraums startet, soll die Freischaltung unter gewissen Voraussetzungen ohne erneute Authentifizierung erhalten bleiben. Dazu werden abhängig von der vorliegenden Steuergerätehochlaufsituation unterstützende Algorithmen zur Entscheidung herangezogen.

Nach dem Hochlauf des Getriebesteuergeräts wird zunächst die Kommunikation mit der Wegfahrsperre angestoßen. Nach erfolgter Freischaltung durch die Wegfahrsperre kann das elektronische Getriebesteuergerät seine Funktion aufnehmen.

Ist jedoch die Freischaltkommunikation negativ verlaufen, muss mindestens zwischen folgenden Fällen unterschieden werden:

| | |
|---|---|
| Fall 1 | Hochlauf nach Power Up / Reset, wobei der Nachlauf störungsfrei beendet wurde. |
| Fall 2 | Hochlauf nach Power Up / Reset, wobei kein Nachlauf erfolgte oder der Nachlauf störungsbehaftet und der Speicherinhalt des dauergepufferten RAM in Ordnung ist. |
| Fall3 | Hochlauf nach Power Up, wobei kein Nachlauf erfolgte oder der Nachlauf störungsbehaftet und der Speicherinhalt des dauergepufferten RAM nicht in Ordnung ist. |

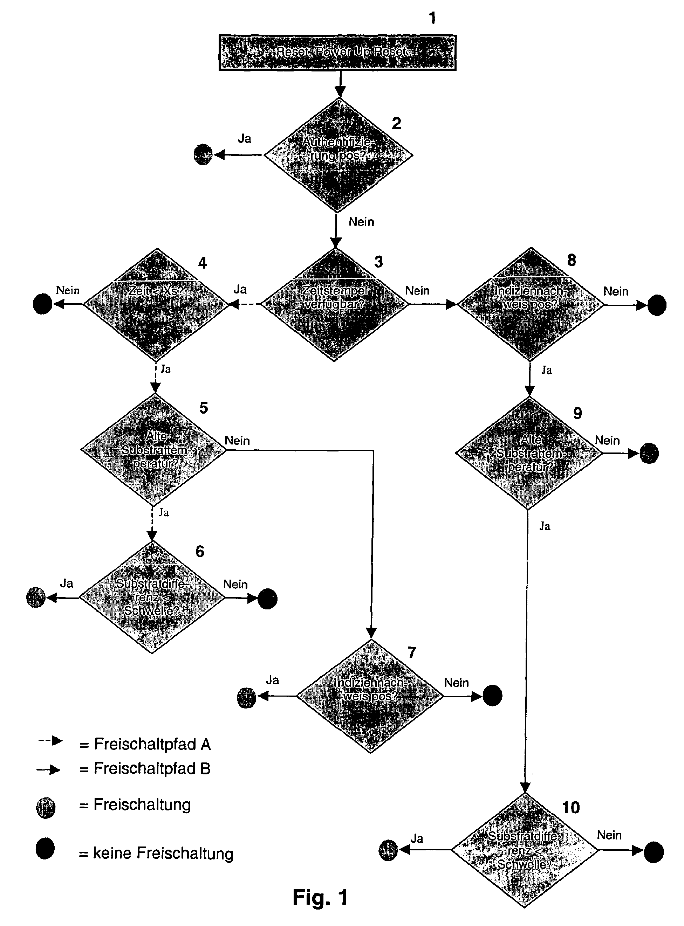

Die Entscheidungsfindung für das Freischalten in den drei Fällen sind in dem Blockschaltdiagramm von Fig. 1 verdeutlicht. Gemäß Block 1 wird ein Reset oder eine Power Up Reset durchgeführt. Anschließend erfolgt in einem Block 2 eine Entscheidung darüber, ob eine Authentifizierung positiv erfolgt ist. Dies erfolgt anhand eines sogenannten "Authentifikationsbits", das nach einer gültigen Authentifizierung in einem nicht flüchtigen Speicher des Steuergeräts gesetzt und im regulären Nachlauf wieder zurückgenommen wird. Während eines Steuergeräteresets ohne Nachlauf steht das Authentifikationsbit nach erneutem Hochlaufen des Steuergeräts weiter zur Verfügung, da es nach wie vor gesetzt ist. Eine Abhängigkeit zwischen Steuergerätefunktionen (z. B. Motor springt an / läuft weiter beziehungsweise Kupplung schließt) und einer erneuten gültigen Authentifizierung ist damit nicht gegeben, so dass das Steuergerät seine Arbeit in jedem Fall wieder aufnimmt. Dies bedeutet, dass nach positiver Authentifizierung das Freischalten erfolgt, wie dies in der Figur mit dem nach links zeigenden Pfeil (Ja) angedeutet ist.

War die Authentifizierung in Block 2 nicht positiv, so erfolgt in Block 3 die Überprüfung, ob ein Zeitstempel verfügbar ist. Während der Betriebsphase des Steuergeräts wird eine eindeutige Zeitinformation in dem dauergepufferten RAM zwischengespeichert. Falls der Zeitstempel verfügbar ist, wird nach dem Block 3 der Freischaltpfad A, der in der Figur mit gestrichelten Pfeilen angedeutet ist, weiterverfolgt. Dies bedeutet, dass nach dem Power Up beziehungsweise Reset gemäß Block 4 mit Hilfe der aktuellen und der zuletzt abgespeicherten Zeitinformation die Differenzzeit ermittelt und mit einer Schwelle Xs verglichen wird. Ist die Differenzzeit kleiner als der Schwellwert Xs, so erfolgt keine Freischaltung.

Ist hingegen die Differenzzeit kleiner als der Schwellwert Xs, d. h. der Fahrzeugbetrieb war nur kurz unterbrochen, so erfolgt gemäß Block 5 die Überprüfung, ob eine alte Substrattemperatur vorhanden ist. Diese ist ein Maß für die Getriebeöltemperatur, die während des EGS-Betriebs zyklisch in einem dauergepufferten RAM aktualisiert wird. Während des gültigen Steuergerätenachlaufs wird die Getriebeöltemperaturinformation aus dem RAM in den nicht flüchtigen Speicher übernommen. In Block 5 wird daher überprüft, ob ein gültiger Nachlauf stattgefunden hat und somit eine Substrattemperatur, d. h. die Temperatur auf dem Substrat eines EGS, gespeichert ist.

Falls eine alte Substrattemperatur vorhanden ist, wird gemäß Block 6 überprüft, ob die Differenz zwischen der aktuellen Substrattemperatur und der alten Substrattemperatur kleiner als eine vorgegebene Schwelle ist. Ist dies der Fall, deutet dies auf eine nur kurze Unterbrechung des Fahrzeugbetriebs hin und es erfolgt eine Freischaltung des Motorsteuergeräts MSG. Falls die Substratdifferenz kleiner als die vorgegebene Schwelle ist, wird das MSG nicht freigeschaltet.

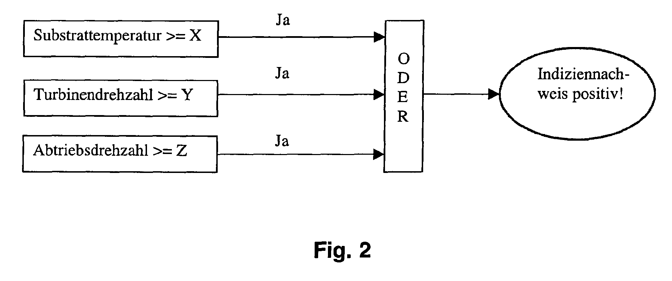

Wird in Block 5 festgestellt, dass keine alte Substrattemperatur vorhanden ist, was an einem nicht durchgeführten Nachlauf oder einem Temperatursensorfehler liegen kann, so wird ein sogenannter Indiziennachweis gemäß Block 7 durchgeführt. Dies bedeutet, dass gemäß dem vorliegenden Ausführungsbeispiel die Informationen Substrattemperatur, Turbinendrehzahl und Abtriebsdrehzahl nach Vergleich mit einer Schwelle als Entscheidungshilfe für ein Freischalten herangezogen werden. Es erfolgt eine ODER-Verknüpfung der drei Schwellwertvergleiche gemäß Figur 2. Dies bedeutet, dass der Indiziennachweis als positiv gilt, wenn mindestens einer der Schwellwertvergleiche bejaht werden kann. Dadurch sind insbesondere diejenigen Fälle erfasst, bei denen es zu einer kurzen Unterbrechung der Bordspannung oder einem Abwürgen des Motors kommt. Ist bei einer oder mehreren dieser Vergleichsgrößen ein Fehlereintrag erfolgt, so können diese nicht für den Indiziennachweis herangezogen werden. Es können dann die noch verbleibenden Messgrößen verglichen und für den Indiziennachweis bewertet werden. Falls jedoch keine der Messgrößen zur Verfügung steht oder jedes Vergleichsergebnis negativ ist, so fällt der Indiziennachweis negativ aus und eine Freischaltung des Motorsteuergeräts bleibt aus.

Ein weiterer Freischaltpfad ist mit durchgezogenen Pfeilen beginnend von Block 3 in Figur 1 dargestellt. Wenn nämlich in Block 3 festgestellt ist, dass kein Zeitstempel zur Verfügung steht, so erfolgt in Block 8 der Indiziennachweis, wie er im Zusammenhang mit Block 7 beschrieben wurde. Bei negativem Ausgang des Indiziennachweises wird die Freischaltung verweigert. Ist der Indiziennachweis dagegen positiv, so wird in Block 9 zusätzlich überprüft, ob eine alte Substrattemperatur, die beispielsweise bei einem korrekten Nachlauf gespeichert wurde und die eine Aussage über die Getriebeöltemperatur darstellt, vorhanden ist.

Wenn in Block 9 festgestellt wird, dass keine alte Substrattemperatur vorhanden ist, kann dies beispielsweise ein Zeichen dafür sein, dass der Motor abgewürgt wurde und ohne korrekten Nachlauf neu gestartet werden soll. Daher erfolgt eine Freischaltung. Ist dagegen eine alte Substrattemperatur vorhanden, so erfolgt in Block 10 ein Vergleich der Substrattemperaturdifferenz mit einer Schwelle gemäß Block 6. Ist die Substrattemperaturdifferenz zwischen aktueller Substrattemperatur und der alten Substrattemperatur geringer als die vorgegebene Schwelle, was auf einen unmittelbar vorhergehenden korrekten Betrieb des Kraftfahrzeugs hinweist, so erfolgt die Freischaltung. Im anderen Fall wird auch hier die Freischaltung verweigert.

Aufgrund der Entscheidungsfindung gemäß Figur 1 ergibt sich damit folgende Fehlerbehandlung für die Fälle 1 bis 3:
- Substrattemperaturfühler defekt: Die Entscheidungswege entsprechen denen bei nicht vorhandener alter Substrattemperatur; eine Freischaltung kann ohne erneute Authentifizierung erfolgen.
- Speicher oder Speicherzelle für Substrattemperatur im flüchtigen, nicht flüchtigen Speicher defekt: Die Entscheidungswege entsprechen denen bei nicht vorhandener alter Substrattemperatur; eine Freischaltung kann ohne erneute Authentifizierung erfolgen.
- Indiziennachweis, Ausfall eines oder mehrerer Signale: Durch eine ODER-Verknüpfung aller benutzten Signale wird nur ein gültiges Signal zur Entscheidungsfindung benötigt. Sollten alle Signale entfallen, kann der Indiziennachweis nicht mehr durchgeführt werden. Eine Entscheidung kann nur noch über eine Resetzeitermittlung in Kombination mit einer gültigen Substrattemperaturdifferenz herbeigeführt werden (Freischaltpfad A).

Ein zusätzlicher Fall 4, bei dem ein neuer Klemme-15-Zyklus aus einem noch aktiven Nachlauf heraus erfolgt, bedarf einer zusätzlichen Zeitüberwachung und ist in Figur 1 nicht dargestellt. Hierzu kann beispielsweise ein Klemme-15-Zeitzähler vorgesehen werden. Die Zeit nach Beendigung eines freigeschalteten Klemme-15-Zyklus wird hierbei durch den mitlaufenden Zähler erfasst. Bei Start eines neuen Klemme-15-Zyklus wird die bis dahin aufgelaufene Zeit mit zu einer Freischaltentscheidung herangezogen. Dementsprechend kann eine Freischaltung ohne Authentifizierung erfolgen, wenn der Zeitzähler beispielsweise eine Zeit unter 30 Sekunden anzeigt. Andernfalls, wenn der Zeitzähler über 30 Sekunden steht, erfolgt keine Freischaltung ohne erneute Authentifizierung.

Die Authentifizierung wird nach einem Steuergeräteneustart anhand eines Authentifizierungsbits zyklisch angestoßen. Parallel hierzu startet beginnend mit dem Steuergeräteneustart ein nicht flüchtiger Zähler zu laufen, der erst nach positiver Authentifizierung auf "0" zurückgesetzt wird. Der Zähler ist resetfest, d. h. als Zählerstartwert ist der Wert vor dem Reset zu sehen. Während der Zeit, in der der Zähler ungleich "0" ist, wird zyklisch die jeweils größte und kleinste Temperatur nicht flüchtig abgespeichert (MIN-/MAX-Speicherung). Nach Überschreiten eines bestimmten Zählerwerts wird die Differenz aus dem gespeicherten MIN- und MAX-Werten gegen eine mindestens erforderliche Temperaturtoleranzschwelle verglichen und bewertet. Ist die Differenz kleiner als die Temperaturtoleranzschwelle, so wird das Authentifizierungsbit zurückgesetzt.

Für die Entscheidung können neben oder alternativ zu der Getriebeöltemperatur auch andere Temperaturen wie die des Kühlwassers herangezogen beziehungsweise entsprechende Temperaturhistorien aufgezeichnet werden. Erfindungsgemäß ergibt sich hierdurch eine erhöhte Sicherheit gegen Manipulation beim Neustart eines Kraftfahrzeugs. Darüber hinaus ist die Realisierung der erfindungsgemäßen Funktionen verhältnismäßig kostengünstig, da keine zusätzliche Sensorik verbaut werden muss.

## Patentansprüche

1. Verfahren zur Sicherung eines Fahrzeugs durch
Erfassen mehrerer Messgrößen, die ein lndiz dafür darstellen, dass das Fahrzeug in einer vorgegebenen Zeit vor einem Neustart bereits regulär betätigt wurde,
Entscheiden (7, 8), ob mindestens eine der erfassten Messgrößen auf einen regulären Betrieb vor dem Neustart hinweist, und
Neustarten des Fahrzeugs unter Umgehung einer Authentifizierungsprozedur, falls für einen regulären Betrieb in der Vergangenheit entschieden wurde, und andernfalls Durchführen der Authentifizierungsprozedur vor dem Neustart.

2. Verfahren nach Anspruch 1, wobei die Messgrößen eine Getriebeöltemperatur, eine Turbinendrehzahl und/oder eine Abtriebsdrehzahl umfassen.

3. Verfahren nach Anspruch 1 oder 2, wobei als weitere Messgröße die Zeit zwischen einem regulären Betriebsende und dem Neustart für die Entscheidung ausgewertet (3) wird.

4. Verfahren nach einem der Ansprüche 1 bis 3, wobei zusätzlich eine Getriebeöltemperatur vom letzten regulären Betrieb für die Entscheidung ausgewertet (5, 9) wird.

5. Verfahren nach einem der Ansprüche 1 bis 4, wobei nach positiver Authentifizierung (2) ein Authentifizierungsbit gesetzt wird.

6. Verfahren nach Anspruch 5, wobei das Authentifizierungsbit in einem regulären Nachlauf zurückgesetzt wird.

7. Vorrichtung zur Sicherung eines Fahrzeugs mit
einer Sensoreinrichtung zur Erfassen mehrerer Messgrößen, die ein Indiz dafür darstellen, dass das Fahrzeug in einer vorgegebenen Zeit vor einem Neustart bereits regulär betätigt wurde,
einer Recheneinrichtung, die an die Sensoreinrichtung angeschlossen ist, zum Entscheiden (7, 8), ob mindestens eine der erfassten Messgrößen auf einen regulären Betrieb vor dem Neustart hinweist, und zur Ausgabe eines Startsignals und
einer Authentifizierungseinrichtung, die mit der Recheneinrichtung verbunden ist, zur Überprüfung der Berechtigung eines Fahrzeugführers zum Neustart des Fahrzeugs, wobei auf eine Authentifizierungsprozedur vor dem Neustart verzichtbar ist, falls laut Recheneinrichtung für einen regulären Betrieb in der Vergangenheit entschieden ist.

8. Vorrichtung nach Anspruch 7, wobei mit der Sensoreinrichtung eine Getriebeöltemperatur, eine Turbinendrehzahl und/oder eine Abtriebsdrehzahl erfassbar ist.

9. Vorrichtung nach Anspruch 7 oder 8, die weiterhin eine Zeitmesseinrichtung umfasst, mit der die Zeit zwischen einem regulären Betriebsende und dem Neustart messbar und für die Entscheidung auswertbar (3) ist.

10. Vorrichtung nach einem der Ansprüche 7 bis 9, wobei in der Recheneinrichtung eine Getriebeöltemperatur vom letzten regulären Betrieb ablegbar ist, so dass sie für die Entscheidung mit ausgewertet (5, 9) werden kann.

11. Vorrichtung nach einem der Ansprüche 7 bis 10, wobei in der Recheneinrichtung ein Authentifizierungsbit bezüglich einer Authentifizierung (2) setzbar ist.

12. Vorrichtung nach Anspruch 11, wobei das Authentifizierungsbit in einem regulären Nachlauf rücksetzbar ist.
